# EUROPÄISCHE PATENTSCHRIFT

(11) **EP 0 996 823 B1**
(45) Veröffentlichungstag und Bekanntmachung des Hinweises auf die Patenterteilung: **14.01.2004**
(21) Anmeldenummer: 99903585.0
(22) Anmeldetag: 26.01.1999
(51) Int. Cl.: F02M 59/46, F02M 63/02, G05D 16/10

(54) **DRUCKBEGRENZUNGSVENTIL**
PRESSURE LIMITATION VALVE
SOUPAPE DE LIMITATION DE PRESSION

(30) Priorität: 20.05.1998 DE 19822671
(43) Veröffentlichungstag der Anmeldung: 03.05.2000
(73) Patentinhaber: ROBERT BOSCH GMBH, 70442 Stuttgart (DE)
(72) Erfinder: HAEBERER, Rainer, D-75015 Bretten (DE); BUERKLE, Frieder, D-70499 Stuttgart (DE); CLAUSS, Helmut, D-71735 Eberdingen (DE); RUECKLE, Markus, D-70567 Stuttgart (DE)
(86) Internationale Anmeldenummer: PCT/DE1999/000186
(87) Internationale Veröffentlichungsnummer: WO 1999/060266

(56) Entgegenhaltungen:
- EP-A- 0 466 081
- FR-A- 1 294 611
- FR-A- 2 341 087
- US-A- 4 062 336
- ISENBURG ET AL.: "Diesel-Speichereinspritzsystem Common Rail, Technische Unterrichtung" , ROBERT BOSCH GMBH , STUTTGART XP002108012 in der Anmeldung erwähnt siehe Seite 31; Abbildung 12
- PATENT ABSTRACTS OF JAPAN vol. 014, no. 418 (M-1022), 10. September 1990 & JP 02 163458 A (NIPPON DENSO CO LTD), 22. Juni 1990

## Beschreibung

### Stand der Technik

Die Erfindung betrifft ein Druckbegrenzungsventil für eine Kraftstoffeinspritzeinrichtungfür Brennkraftmaschinen, umfassend ein Gehäuse mit einem Hochdruckanschluß und einem Rücklaufanschluß und einen in einer Gehäusebohrung zwischen einem dem Hochdruckanschluß zugewandten Ventilsitz und einem dem Rücklaufanschluß zugewandten Anschlag entgegen der in Richtung des Ventilsitzes wirkenden Federkraft einer Feder axial verschieblichen, topfförmigen Kolben, welcher wenigstens eine die Innenseite des topfförmigen Kolbens mit der Gehäusebohrung verbindende Durchlaßöffnungen aufweist.

Derartige Druckbegrenzungsventile sind seit längerem bekannt und gehen beispielsweise aus der deutschen Veröffentlichung "Diesel-Speichereinspritzsystem Common-Rail, Technische Unterrichtung Bosch Nr. 1987722054; KH/VDT-0997-DE" hervor.

Die Aufgabe eines solchen Druckbegrenzungsventils entspricht im wesentlichen dem eines Überdruckventils. Es schützt bei Ausfall der Druckregelung vor einem Zerbersten der Komponenten wegen Überbeanspruchung. Das Druckbegrenzungsventil begrenzt den Druck im Drucksammelbehälter, dem sogenannten Rail, indem es bei zu hoher Beanspruchung vom Ventilsitz abhebt und die Durchlaßöffnungen freigibt. Aus dem Stand der Technik bekannte und in der obengenannten Veröffentlichung beschriebene Druckbegrenzungsventile lassen im Drucksammelraum einen maximalen Druck von kurzzeitig 1500 HPa zu.

Hierdurch wird ausgeschlossen, daß bei eventuellen Systemstörungen aufgrund eines zu hohen Drucks in dem Kraftstoffeinspritzsystem Komponenten des Kraftstoffeinspritzsystems beschädigt werden können. Treten Störungen auf, die beispielsweise zu einer stetigen Vollförderung, d.h. bei einem sehr hohen Systemdruck führen, was zum Beispiel in einem Notfahrprogramm der Fall ist, so wird durch das Druckbegrenzungsventil durch Abführen einer Kraftstoffmenge in den Tank ein Druck in dem Kraftstoffeinspritzsystem eingestellt, der einerseits eine Beschädigung irgendeiner Komponente des Kraftstoffeinspritzsystems ausschließt und der andererseits mindestens so groß ist, daß ein Öffnen der Kraftstoffeinspritzdüsen und somit ein Fahrbetrieb möglich ist.

Ein solcher Notfahrbetrieb stellt hohe Anforderungen an die Dauerhaltbarkeit sowohl des Ventils im Bereich des Ventilsitzes als auch der Feder. Bei Beaufschlagung des Druckbegrenzungsventils, beispielsweise mit einem sehr hohen im Notfahrbetrieb herrschenden Druck, können zum Beispiel ein Einschlagen des Kolbens am Ventilsitz oder ein Schwingungsbruch der Feder auftreten.

Aufgabe der Erfindung ist es daher, ein Druckbegrenzungsventil der gattungsgemäßen Art dahingehend weiterzubilden, daß zum einen in allen Betriebssituationen kein pulsierender Druck in dem Druckbegrenzungsventil innerhalb vorgegebener Grenzen entsteht und daß weder ein Prellen und/oder Einschlagen des Kolbens im/am Ventilsitz noch am Anschlag auftritt.

### Vorteile der Erfindung

Diese Aufgabe wird bei einem Druckbegrenzungsventil der eingangs beschriebenen Art erfindungsgemäß dadurch gelöst, mit den Merkmalen gemäß Anspruch 1.

Die Anordnung der Drosselelemente in Strömungsrichtung des Kraftstoffs vor und/oder hinter dem Ventilsitz hat den besonders großen Vorteil, daß der Systemdruck durch diese Drosselelemente abhängig von der Durchflußmenge eingestellt wird. Darüber hinaus wird durch die Drosselelemente eine strömungsgünstige Führung des Kraftstoffs innerhalb des Druckbegrenzungsventils ermöglicht.

Hinsichtlich der Anordnung der Drosselelemente sind die unterschiedlichsten Ausführungsformen denkbar. Bei einer vorteilhaften Ausführungsform ist vorgesehen, daß ein Drosselelement im Hochdruckanschluß angeordnet ist. In diesem Falle ist das Drosselelement dem Ventilsitz vorgeschaltet und drosselt den am Ventilsitz anstehenden Systemdruck.

Bei einer anderen Ausführungsform ist vorgesehen, daß in der wenigstens einen Durchlaßöffnung ein Drosselelement angeordnet ist. Durch eine derartige Anordnung der Drosselelemente wird ein Prellen oder Aufschlagen des Kolbens auf den Ventilsitz wirkungsvoll vermieden.

Bei einer besonders vorteilhaften Ausführungsform ist dabei vorgesehen, daß in dem topfförmigen Kolben koaxial ein weiterer Kolben angeordnet ist, auf den durch die oder eine weitere Feder eine Federkraft in Richtung eines weiteren, an dem topfförmigen Kolben ausgebildeten Ventilsitzes ausübbar ist, und welcher wenigstens ein weiteres Drosselelement aufweist, welches durch Abheben des weiteren Kolbens von dem weiteren Ventilsitz mit unter Druck stehendem Kraftstoff beaufschlagbar ist. Dieses zweistufig ausgebildete Druckbegrenzungsventil hat den großen Vorteil, daß es einerseits erst bei Überschreiten eines vorgegebenen Drucks öffnet und andererseits ein unabhängig von dem Öffnungsdruck wählbarer "Haltedruck" einstellbar ist. Das Druckbegrenzungsventil öffnet dabei erst, wenn ein großer Druck überschritten wird, was beispielsweise während des Notfahrbetriebs der Fall ist. Durch den nach dem Öffnen des Druckbegrenzungsventils herrschenden Haltedruck wird vermieden, daß die Komponenten der Kraftstoffeinspritzeinrichtung bei geöffnetem Druckbegrenzungsventil kontinuierlich mit dem hohen Öffnungsdruck belastet werden. Der Haltedruck kann dabei durch Wahl der weiteren Drosselelemente und der Federkraft der Feder auf einen vorgegebenen Wert festgelegt werden.

Was die Ausbildung der weiteren Drosselelemente in dem weiteren Kolben betrifft, so sind rein prinzipiell unterschiedliche Ausführungsformen denkbar. Eine vorteilhafte Ausführungsform sieht vor, daß die weiteren Drosselelemente durchgängige Öffnungen in dem weiteren Kolben sind. Bei einer anderen vorteilhaften Ausführungsform ist vorgesehen, daß die weiteren Drosselelemente eine oder mehrere voreingestellte Undichtigkeiten an dem weiteren Ventilsitz sind.

Die Ventilsitze können auf unterschiedliche Art und Weise ausgebildet sein.

Eine vorteilhafte Ausführungsform sieht die Ausbildung des Ventilsitzes als Kegelsitz vor.

Eine andere vorteilhafte Ausführungsform sieht die Ausbildung des Ventilsitzes als Kugelsitz vor.

Bei dem obenbeschriebenen zweistufigen Druckbegrenzungsventils können dabei beispielsweise beide Ventilsitze als Kegelsitze oder als Kugelsitze oder auch abwechselnd als Kegel- und Kugelsitze ausgebildet sein.

### Zeichnung

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Schnittdarstellung eines Druckbegrenzungsventils gemäß der Erfindung;
- Fig. 2: eine in Fig. 1 mit II bezeichnete Detailvergrößerung;
- Fig. 3: eine Schnittdarstellung eines weiteren Ausführungsbeispiels eines Druckbegrenzungsventils gemäß der Erfindung;
- Fig. 4: Schnittdarstellungen von zwei weiteren Ausführungsbeispielen eines Druckbegrenzungsventils gemäß der Erfindung und
- Fig. 5: schematisch den zeitlichen Druckverlauf bei den in Fig. 4 dargestellten Druckbegrenzungsventilen.

### Beschreibung der Ausführungsbeispiele

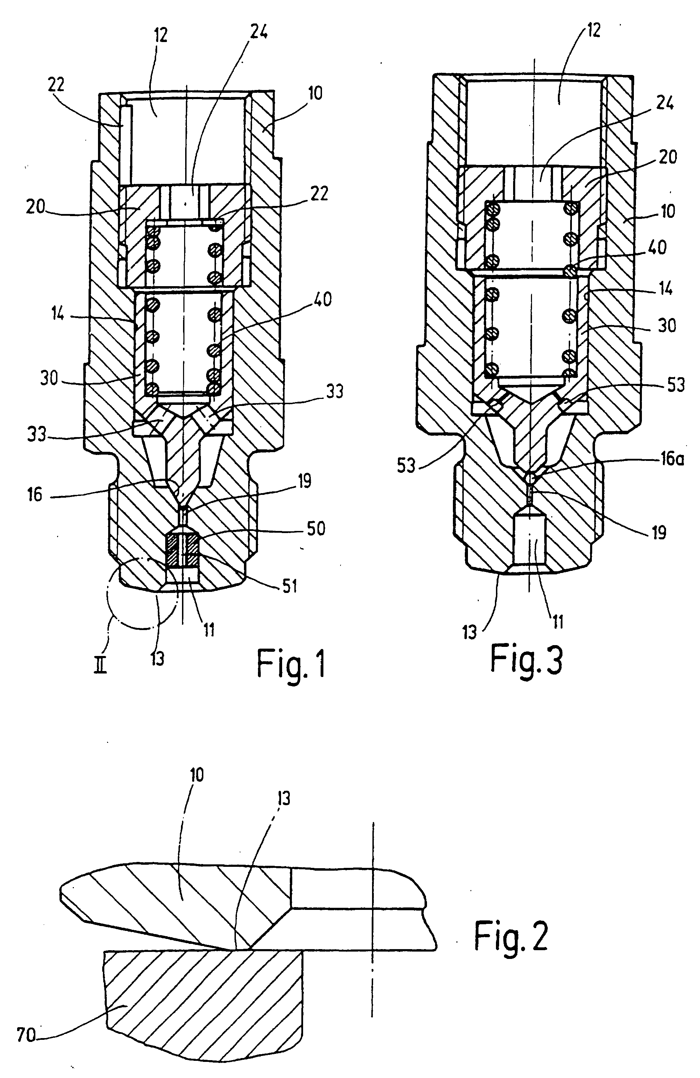

Ein Ausführungsbeispiel eines Druckbegrenzungsventils, dargestellt in Fig. 1, umfaßt ein Gehäuse 10 mit einem Hochdruckanschluß 11 und einem Rücklaufanschluß 12. In dem Gehäuse ist eine stufig ausgebildete Gehäusebohrung 14 vorgesehen, die auf ihrer dem Hochdruckanschluß 11 zugewandten Seite in einem Ventilsitz 16 endet und in welche auf ihrer dem Rücklaufanschluß 12 zugewandten Seite ein Anschlag 20, beispielsweise wie dargestellt durch Einschrauben in ein in der Gehäusebohrung 14 vorgesehenes Gewinde, angeordnet ist. Der Anschlag kann wie in Fig. 1 dargestellt ist, beispielsweise durch ein Heli-Coil 22 gesichert sein.

Zwischen dem Anschlag 14 und dem Ventilsitz 16 ist ein Kolben 30 in Axialrichtung des Druckbegrenzungsventils entgegen der Federkraft einer Feder 40 verschieblich. Der Kolben 30 weist die Gestalt eines topfähnlichen Gebildes auf, in dessen Innerem die Feder 40 geführt ist und sich abstützt. Der Anschlag 20 weist ebenfalls die Gestalt eines Topfes auf, in dessen Innerem die Feder 40 auf ihrer dem Rücklaufanschluß 12 zugewandten Seite geführt ist und sich abstützt. Zur Einstellung der Vorspannung der Feder 40 kann dabei eine Scheibe 22 in dem Anschlag 20 vorgesehen sein, welche in Axialrichtung verstellbar und arretierbar ist.

An seiner dem Rücklaufanschluß 12 zugewandten Seite weist der Anschlag 20 eine Durchlaßöffnung 24 auf.

Der Kolben 30 weist auf seiner dem Ventilsitz 16 zugewandten Seite ebenfalls Durchlaßbohrungen 33 auf, welche die Gehäusebohrung 14 mit dem Inneren des topfförmigen Kolbens 30 verbinden.

Der Ventilsitz 16 ist bei dem in Fig. 1 dargestellten Druckbegrenzungsventil als Kegelsitz ausgebildet, wobei der topfförmige Kolben 30 auf seiner dem Ventilsitz 16 zugewandten Seite kegelig ausgeführt ist.

Um einen Verschleiß durch Einschlagen des topfförmigen Kolbens 30 auf den Ventilsitz 16 zu verhindern, ist vorgesehen, daß die Dichtstelle des Ventilsitzes mit dem Wirkdurchmesser für das Öffnen des Ventils übereinstimmt, so daß ein mögliches Einschlagen des Kolbens 30 auf den Ventilsitz 16 diesen Wirkdurchmesser nicht vergrößert. Vorteilhafterweise wird dabei eine möglichst kleine Kegelwinkeldifferenz zwischen dem kegeligen Ende des Kolbens 30 und dem Ventilsitz 16 gewählt. Dies führt bei einem möglichen Einschlagen des Kolbens 30 auf den Ventilsitz 16 zu großen Anlageflächen und somit zu kleinen Preßspannungen, die einem Einschlagen entgegenwirken.

In dem Hochdruckanschluß 11 ist ein Drosselelement 50 mit einer Drosselbohrung 51 vorgesehen, welches den durch den Hochdruckanschluß 11 unter hohem Druck strömenden Kraftstoff drosselt. Dabei kann der Durchmesser der in dem Drosselelement 50 vorgesehenen Drosselbohrung 51 geringfügig größer sein als die Zulaufbohrung 19 in dem Gehäuse 10, wie es in Fig. 1 dargestellt ist. Es versteht sich, daß der Durchmesser der Drosselbohrung 51 auch gleich oder kleiner sein kann als derjenige der Zulaufbohrung 19. Eine Drosselung des unter Druck strömenden Kraftstoffs wird in jedem Falle durch das Drosselelement 50 bewirkt. Durch das Drosselelement 50 wird vermieden, daß ein pulsierender Druck innerhalb des Druckbegrenzungsventils entsteht, der zu Schwingungen und eventuell zu einem Schwingungsbruch der Feder 40 führen kann. Darüber hinaus wird ein Prellen des Kolbens 30 am Ventilsitz 16 vermieden.

Das Drosselelement 50, d.h. seine Länge und der Durchmesser seiner Drosselbohrung 51, wird so eingestellt, daß der Kolben weder auf den Anschlag 20 noch auf den Ventilsitz 16 schlägt. Das Drosselelement 51 wird beispielsweise so eingestellt, daß der Kolben etwas unterhalb des Anschlags 20 in einer "schwimmenden Lage" gehalten wird.

Wie in Fig. 1 und insbesondere in Fig. 2 dargestellt ist, erfolgt die Abdichtung des Druckbegrenzungsventils durch eine sogenannte "Beißkante" 13, deren Dichtprinzip entweder auf einer plastischen Verformung des Gehäuses 10 des Druckbegrenzungsventils oder der plastischen Verformung einer ebenen Fläche 70, an der es zur Anlage kommt, basiert.

Bei einem zweiten Ausführungsbeispiel, dargestellt in Fig. 3, sind diejenigen Elemente, die mit denen des ersten identisch sind, mit denselben Bezugszeichen versehen, so daß bezüglich deren Beschreibung auf die Ausführungen zum ersten Ausführungsbeispiel voll inhaltlich Bezug genommen wird.

Im Gegensatz zum ersten Ausführungsbeispiel sind die Drosselelemente dem Ventilsitz nicht vor-, sondern nachgeschaltet. Wie aus Fig. 3 hervorgeht, sind jeweils in den Durchlaßöffnungen 33 Drosselelemente 53 angeordnet. Durch diese Drosselelemente 53 wird die Bewegung des Kolbens 30 gedämpft, so daß er weder auf den Anschlag 20 noch auf den Ventilsitz 16 schlägt.

Darüber hinaus ist bei dem in Fig. 3 dargestellten Beispiel der Ventilsitz 16 nicht als Kegel-, sondern als Kugelsitz ausgebildet, wobei in einem kegelförmigen Ausschnitt eine Dichtkugel 16a angeordnet ist, welche beim Auftreffen des Kolbens 30 auf die Dichtkugel 16a die Zulaufbohrung 19 verschließt.

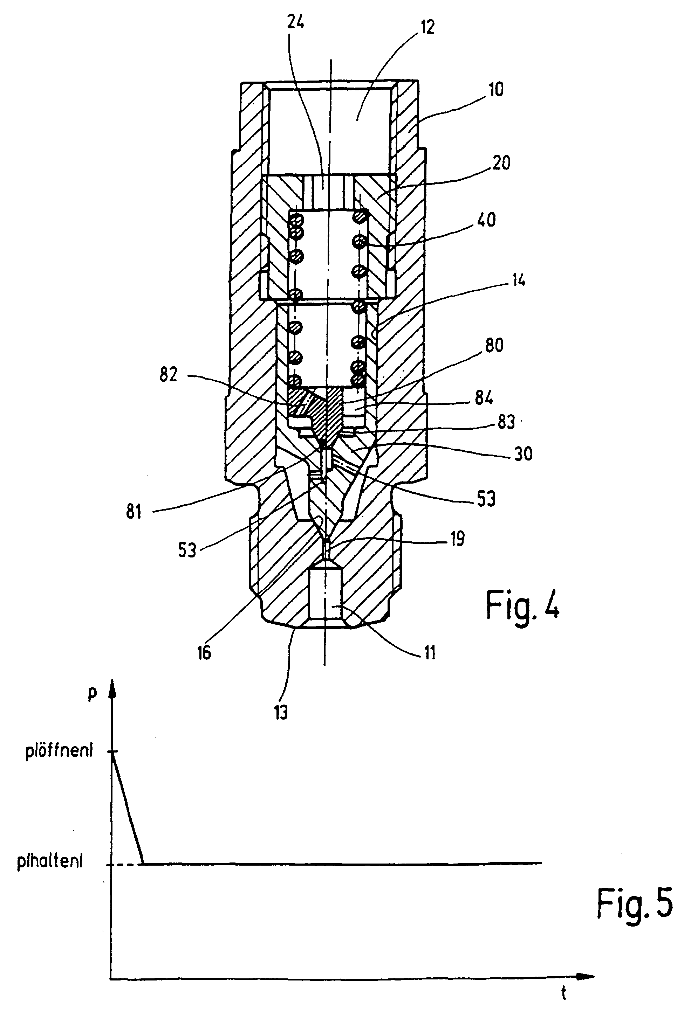

Bei den in Fig. 4 dargestellten Ausführungsbeispielen sind diejenigen Elemente, die mit denen des zweiten Ausführungsbeispiels identisch sind, mit denselben Bezugszeichen versehen, so daß bezüglich deren Beschreibung auf die Ausführungen zum zweiten Ausführungsbeispiel voll inhaltlich Bezug genommen wird.

Im Gegensatz zum zweiten Ausführungsbeispiel ist bei den in Fig. 4 dargestellten Ausführungsbeispielen im Inneren des topfförmigen Kolbens 30 ein weiterer Kolben 80 angeordnet, der entgegen der Federkraft der Feder 40, die in Richtung des Ventilsitzes 16 wirkt, axial verschieblich ist. In diesem koaxial zu dem topfförmigen Kolben 30 angeordneten weiteren Kolben 80 ist ein Drosselelement in Form einer Öffnung 81 vorgesehen, wie es auf der linken Hälfte der Fig. 4dargestellt ist. Darüber hinaus kann, wie es auf der rechten Hälfte der Fig. 4 dargestellt ist, auch ein Drosselelement in Form einer vorgegebenen Undichtigkeit an dem weiteren Ventilsitz 81 vorgesehen sein, die mit einer Öffnung 84 in dem Kolben verbunden ist. Die Drosselelemente 53 in dem topfförmigen Kolben 30 sind durch den weiteren Kolben 80, der auf seiner dem weiteren Ventilsitz 81 zugewandten Seite, wie in Fig. 4 dargestellt, beispielsweise kegelförmig ausgebildet ist, verschließbar.

Die Funktion der in Fig. 4 dargestellten Druckbegrenzungsventile wird nachfolgend beschrieben.

Steigt der Druck in dem Hochdruckanschluß 11 über einen vorgebbaren Druck an, wobei dieser vorgebbare Druck durch die Rückstellkraft der Feder 40 und den Öffnungsquerschnitt der Zulaufbohrung 19 einstellbar ist, so hebt der in der Bohrung 14 verschiebliche topfförmige Kolben 30 von dem Ventilsitz 16 ab und öffnet so den Ventilsitz 16. Der topfförmige Kolben 30 wird dabei durch den Druck solange axial verschoben, bis er an dem Anschlag 20 zur Anlage kommt.

Der unter hohem Druck stehende Kraftstoff fließt durch die Drosselelemente 53 zu dem am weiteren Ventilsitz 81 anliegenden kegelförmigen Ende des weiteren Kolbens 80. Der Öffnungsdruck dieses weiteren Kolbens 80 ist dabei auf einen gewünschten Druck, zum Beispiel in Höhe von 600 HPa, während beispielsweise eines Notfahrprogrammsausgelegt. Die Einstellung erfolgt dabei über die Druckfläche vor dem zweiten Kolben 80 und die Federvorspannung der Feder 40. Nachdem der weitere Kolben 80 von dem weiteren Ventilsitz 81 abgehoben ist, wodurch die Drosselelemente 53 in dem topfförmigen Kolben 30 geöffnet werden, fließt der unter Druck stehende Kraftstoff durch die in dem weiteren Kolben 80 angeordneten Drosselelemente 82 bzw. 83 gedrosselt in das Innere des topfförmigen Kolbens 30 und über die in dem Anschlag 20 vorgesehene Öffnung 24 über den Rücklaufanschluß 12 beispielsweise in einen (nicht dargestellten) Tank der Brennkraftmaschine ab. Die Größe der Drosselelemente 82, 83 sind dabei so eingestellt, daß das Druckbegrenzungsventil als Regelventil arbeitet und einen gewünschten Druck zum Beispiel in Höhe von 600 HPa unabhängig von der Durchflußmenge in der Kraftstoffeinspritzeinrichtung hält.

Der Druck-Zeitverlauf der in Fig. 4 dargestellten Druckbegrenzungsventile ist in Fig. 5 schematisch dargestellt.

Zunächst wird das Druckbegrenzungsventil durch einen hohen Druck p (öffnen) geöffnet, der Druck sinkt innerhalb kurzer Zeit auf einen Druck p(halten) durch Abheben des weiteren Kolbens 80 von dem weiteren Ventilsitz 81 ab. Durch die Einstellung der in dem weiteren Kolben 80 vorgesehenen Drosselelemente 82, 83 wird der Druck dann auf dem vorgegebenen Wert p(halten) gehalten.

Die in Fig. 4 dargestellten Ausführungsbeispiele eines solchen gewissermaßen zweistufigen Druckbegrenzungsventils weisen den großen Vorteil auf, daß sowohl der topfförmige Kolben 30 als auch der weitere Kolben 80 durch die Federkraft einer einzigen Feder 40 beaufschlagt werden. Vorteilhaft hierbei sind insbesondere niedrige Herstellungskosten, ein kleiner Bauraum und eine einfache Montage des Druckbegrenzungsventils.

Es versteht sich jedoch, daß statt nur einer einzigen Feder auch zwei Federn - nämlich eine Feder für den topfförmigen Kolben 30 und eine weitere Feder für den weiteren Kolben 80 - vorgesehen sein können. In diesem Falle kann der Öffnungsdruck der beiden gewissermaßen ineinander koaxial angeordneten Ventile unabhängig voneinander eingestellt werden.

## Patentansprüche

1. Druckbegrenzungsventil für eine Kraftstoffeinspritzeinrichtung für Brennkraftmaschinen umfassend ein Gehäuse (10) mit einem Hochdruckanschluß (11) und einem Rücklaufanschluß (12) und einen in einer Gehäusebohrung (14) zwischen einem dem Hochdruckanschluß (11) zugewandten einer Zulaufbohrung (19) nachgeschalteten Ventilsitz (16) und einem dem Rücklaufanschluß (12) zugewandten Anschlag (20) entgegen der in Richtung des Ventilsitzes (16) wirkenden Federkraft einer Feder (40) axialverschieblichen, topfförmigen Kolben (30), welcher wenigstens eine die Innenseite des topfförmigen Kolbens (30) mit der Gehäusebohrung (14) verbindende Durchlaßöffnung (33) aufweist, **dadurch gekennzeichnet, daß** wenigstens ein Drosselelement (50; 53) in Strömungsrichtung des Kraftstoffs vor der Zulaufbohrung (19) und/oder hinter dem Ventilsitz (16) im topfförmigen Kolben (30) angeordnet ist.

2. Druckbegrenzungsventil nach Anspruch 1, **dadurch gekennzeichnet, daß** ein Drosselelement (50) im Hochdruckanschluß angeordnet ist.

3. Druckbegrenzungsventil nach Anspruch 1, **dadurch gekennzeichnet, daß** in der wenigstens einen Durchlaßöffnung (33) ein Drosselelement (53) angeordnet ist.

4. Druckbegrenzungsventil nach Anspruch 3, **dadurch gekennzeichnet, daß** in dem topfförmigen Kolben (30) koaxial ein weiterer Kolben (80) angeordnet ist, auf den durch die oder eine weitere Feder (40) eine Federkraft in Richtung eines weiteren, an dem topfförmigen Kolben (30) ausgebildeten Ventilsitzes (81) ausübbar ist, und welcher wenigstens ein weiteres Drosselelement (82; 83) aufweist, welches durch Abheben des weiteren Kolbens (80) von dem weiteren Ventilsitz (81) mit unter Druck stehendem Kraftstoff beaufschlagbar ist.

5. Druckbegrenzungsventil nach Anspruch 4, **dadurch gekennzeichnet, daß** die weiteren Drosselelemente (82) durchgängige Öffnungen in dem weiteren Kolben (80) sind.

6. Druckbegrenzungsventil nach Anspruch 5, **dadurch gekennzeichnet, daß** die weiteren Drosselelemente (83) eine oder mehrere voreingestellte Undichtigkeiten an dem weiteren Ventilsitz sind.

7. Druckbegrenzungsventil nach einem der voranstehenden Ansprüche, **dadurch gekennzeichnet, daß** der Ventilsitz ein Kegelsitz (16) ist.

8. Druckbegrenzungsventil nach einem der Ansprüche 1 bis 6, **dadurch gekennzeichnet, daß** der Ventilsitz ein Kugelsitz ist.

## Claims

1. Pressure-limiting valve for a fuel injection device for internal combustion engines, comprising a housing (10) with a high-pressure connection (11) and a return flow connection (12), and a pot-shaped piston (30) which is axially displaceable, counter to the spring force of a spring (40) which acts in the direction of the valve seat (16), in a housing bore (14) between a valve seat (16) which faces the high-pressure connection (11) and is connected downstream of the inflow bore (19) and a stop (20) which faces the return flow connection (12), said piston (30) having at least one through-opening (33) which connects the inside of the pot-shaped piston (30) to the housing bore (14), **characterized in that** at least one throttle element (50; 53) is arranged in the pot-shaped piston (30) upstream of the inflow bore (19) and/or downstream of the valve seat (16) in the direction of flow of the fuel.

2. Pressure-limiting valve according to Claim 1, **characterized in that** a throttle element (50) is arranged in the high-pressure connection.

3. Pressure-limiting valve according to Claim 1, **characterized in that** a throttle element (53) is arranged in the at least one through-opening (33).

4. Pressure-limiting valve according to Claim 3, **characterized in that** a further piston (80) is arranged coaxially in the pot-shaped piston (30), on which further piston (80) a spring force can be exerted, by means of the one spring (40) or a further spring (40), in the direction of a further valve seat (81) which is formed on the pot-shaped piston (30) and which has at least one further throttle element (82; 83) to which pressurized fuel can be supplied by lifting off the further piston (80) from the further valve seat (81).

5. Pressure-limiting valve according to Claim 4, **characterized in that** the further throttle elements (82) are continuous openings in the further piston (80).

6. Pressure-limiting valve according to Claim 5, **characterized in that** the further throttle elements (83) are one or more preset non-sealed points on the further valve seat.

7. Pressure-limiting valve according to one of the preceding claims, **characterized in that** the valve seat is a bevel seat (16).

8. Pressure-limiting valve according to one of Claims 1 to 6, **characterized in that** the valve seat is a bevel seat.

## Revendications

1. Soupape de limitation de pression pour une installation d'injection de carburant d'un moteur à combustion interne comprenant :
- un boitier (10) avec un branchement haute pression (11) et un branchement de retour (22) et
- un piston (30) en forme de pot, coulissant axialement dans un alésage (14) du boitier entre un siège de soupape (16) tourné vers le branchement haute pression (11) en aval d'un perçage d'alimentation (19), et une butée (20) tournée vers le branchement de retour (12), contre l'action d'un ressort (40) agissant dans la direction du siège de soupape (16),
ce piston ayant au moins un orifice traversant (33) reliant le côté intérieur du piston (30) en forme de pot à l'alésage (14) du boîtier,
**caractérisée en ce qu'**
au moins un organe d'étranglement (50 ; 53) est prévu dans le piston (30) en forme de pot, en amont du perçage d'alimentation (19) dans le sens de l'écoulement du carburant et/ou en aval du siège de soupape (16).

2. Soupape de limitation de pression selon la revendication 1,
**caractérisée par**
un organe d'étranglement (50) prévu dans le branchement haute pression.

3. Soupape de limitation de pression selon la revendication 1 ,
**caractérisée par**
un organe d'étranglement (53) prévu dans au moins un orifice de passage (33).

4. Soupape de limitation de pression selon la revendication 3,
**caractérisée par**
un autre piston (80) monté coaxialement dans le piston (30) en forme de pot, et sur lequel agit une force de ressort exercée par le ressort (40) ou un autre ressort, en direction d'un autre siège de soupape (81) réalisé dans le piston en forme de pot (30) et qui comporte au moins un autre organe d'étranglement (82, 83),
cet organe étant sollicité par le carburant sous pression lors du soulévement de l'autre piston (80) par rapport à l'autre siège de soupape (81).

5. Soupape de limitation de pression selon la revendication 4,
**caractérisée en ce que**
les autres éléments d'étranglement (82) ont des orifices traversant dans l'autre piston (80).

6. Soupape de limitation de pression selon la revendication 5,
**caractérisée en ce que**
les autres éléments d'étranglement (83) sont constitués par un ou plusieurs défauts d'étanchéité pré-réglés de l'autre siège de soupape.

7. Soupape de limitation de pression selon l'une des revendications précédentes,
**caractérisée en ce que**
le siège de soupape a un siège conique (16).

8. Soupape de limitation de pression selon l'une des revendications 1 à 6,
**caractérisée en ce que**
le siège de soupape est un siège à bille.
